# EUROPEAN PATENT APPLICATION

(11) **EP 1 139 221 A1**
(43) Date of publication of application: **04.10.2001**
(21) Application number: 00309839.9
(22) Date of filing: 06.11.2000
(51) Int. Cl.: G06F 11/273, G06F 11/34

(54) **Web monitor**

(30) Priority: 27.03.2000 US 535210
(71) Applicant: LUCENT TECHNOLOGIES INC., Murray Hill, New Jersey 07974-0636 (US)
(72) Inventor: Nazzaro, Mark, Cranford, New Jersey 07016 (US); Perrone, Anthony Joseph, Staten Island, New York 10312 (US)
(74) Representative: Buckley, Christopher Simon Thirsk

(57) **Abstract**

A web monitor (101) monitors web servers (102-1,...,102-P), connected on Internet (104), for faults or failures by automatically sending, at predetermined periodic intervals, requests to the web servers' URLs for web pages. An invalid attempt to a web server results if a connection cannot be established to that server, if a web page cannot be retreived within a predetermined time from the server, or if the content of the responsive page from the server is not what expected. After a predetermined number of invalid attempts to a server, that server is determined to be either faulty or in a failure mode. The web monitor, upon deciding that a monitored server is in a failure mode, automatically generates and sends a message to one or more system administrators or other individuals or machines via email (110), page (111) or telephone call (115) to inform the recipient(s) of the fault or failure of that server.

## Description

### Technical Field

This invention relates to detecting server failures or faults on data networks.

### Background of the Invention

Popular web sites connected on the Internet or on private Intranets are likely to be accessed by thousands of users daily. System administrators responsible for maintaining high quality of service from a server need to constantly monitor that server to ensure continuous user access. Users must be able to connect to that server's URL, retrieve a requested web page once the connection is established, and, upon retrieving that page, receive information content that is valid. Various prior art methods have been employed by system administrators to check on the operational status of a web server. For example, a server can be "pinged" to determine whether a response is generated and returned. A response, however, only indicates that the "ping" was received by the server. A system administrator may retrieve a web page to determine whether the server is operative and providing the requested output. Such a response only indicates, however, that the server is operative at the time the request was made. The administrator thus must periodically refresh that page throughout the day in order to determine the continued operability of the server.

A need exists, to be able to continually monitor a web server to determine if and when a failure occurs so that remedial action can take place to restore service and maintain access.

### Summary of the Invention

The monitor of the present invention monitors the operability of pre-selected servers, such as web servers, by automatically issuing requests to retrieve an information file from a server at predetermined and preferably periodic intervals, determining whether or not the server is responsive to an individual request within a predetermined time with the requested information, and comparing at least a portion of the content of the retrieved information with predetermined and expected information content. If, in response to a predetermined number of requests, the monitor is unable to establish a connection to the server, is unable to receive the requested information file within a predetermined time interval, or receives a file in which the content is not as expected, then the monitor assumes that the monitored web site has entered a failure state. A message is then transmitted to one or more specified addressees by email or other medium, such as by paging, or by automatically generating a telephone call. Furthermore, statistics such as the response time at certain time intervals in a day, are gathered and stored for later review by the administrator and/or others to enable the system administrator to determine how system load at various times of the day affects the quality of service provided to users. The present invention can be embodied as a software residing on a terminal or on a server.

The present invention is embodied as a web monitor that monitors- the quality of service provided by a web server connected on an Internet or a private Intranet. It can also be used to monitor FTP servers, database servers and operations systems on any other type of data network.

### Brief Description of the Drawing

FIG. 1 is a block diagram showing the web monitor of the present invention embodied within a web server or client connected to the Internet, which monitors the operational status of pre-selected web servers and upon detecting a failure, generates one or more of a phone message, a page, and an email message that are addressed to specified addressees associated with the failed server; and

FIG. 2 is a flow chart detailing the steps of the present invention.

### Detailed Description

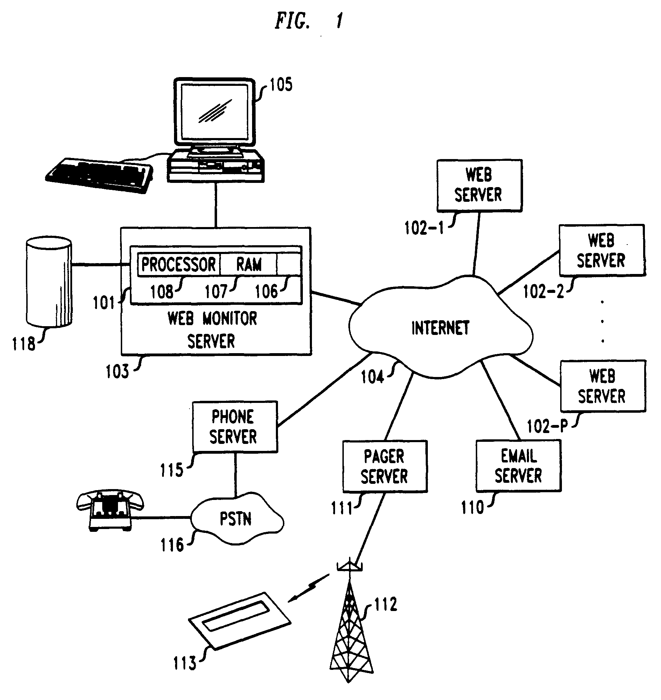

With reference to FIG. 1, web monitor 101 is a program residing in RAM 107 associated with processor 108 within a web server 103. Web monitor 101 monitors a plurality of web sites 102-1 ― 102-P connected on Internet 104. In a preferred embodiment, web monitor 101 is written in Java JDK 1.2 language making it independent of any platform as long as that platform supports the well known Java language. Associated with web monitor 101 is an input file 106 containing a list of the particular web sites 102-1 ― 102-P that will be repeatedly polled by means of a request to determine their operability. Thus, input file 106 contains a list of the URLs of the web sites 102-1― 102-P. More specifically, each URL in input file 106 represents a selected page resident on the web site whose content is sent back to the web monitor in response to each polling request issued by the web monitor. In a preferred embodiment, that selected page contains at least some information content that is consistently expected to be present within that page each time a request for that page is made.

In accordance with the web monitor program, a network administrator specifies through a terminal 105 various parameters associated with the monitoring process at each web site listed in input file 106. Thus, a plurality of parameters are specified that define specific fault criteria that are used to determine when a monitored web site is in a "failure" or "fault" state. In addition to these fault criteria, to be described in detail below, for each web site in file 106 a rate of polling is specified that determines the time between issuance of each request to the web site. In the preferred embodiment requests are issued periodically every *N* seconds. The response to each such request is either a page generated by the web site or an error condition that is potentially indicative of a failure or fault at the web site.

Several fault determining criteria are independently specified for each web site. These include a parameter, *M,* that represents the number of invalid attempts (invalid_attempts) to retrieve a web page can occur before the web monitor determines that the monitored web site is in a failure or fault state and generates an alarm. Thus, a single invalid attempt will not trigger an alarm unless *M* is set at zero. When the number invalid_attempts exceeds *M,* a failure routine is initiated to inform the system administrator, or other person or machine, of a failure or fault at the web site using a failure-indicating mechanism that will be later described.

An invalid attempt to retrieve a web page is determined from different error conditions. An inability to establish a connection to the web site URL in response to a request results in a first error condition. An inability to retrieve the requested page within a specified time, *T,* results in a second error condition. A third error condition results when the received information content of a retrieved page is not as expected. Knowing *a priori* the expected content of the web page at the URL, the web monitor compares the content of the received page with its expected content to determine whether the response to the request is indicative of an error condition. The determination whether the received content is the expected content can be implemented in several ways. For example, the content of the entire received page can be compared with the content of the expected page. Alternatively, by searching the received page for an expected alphanumeric character string or hidden characters, a determination can be made whether the content is valid.

When the number invalid_attempts for a monitored web site exceeds *M*, an alarm is generated and the web monitor generates a message in accordance with one or more failure alerting methodologies specifically associated with that web site. Thus, for example, when an alarm is generated, the web monitor 101 may generate an email message that is addressed to the failed or faulty web site's system administrator at a specified email address. The web monitor thus sends an email message over Internet 104, which is stored on a mail server 110 for retrieval by the system administrator or other individual. The email message could also be delivered to another server or client, which may automatically act upon the message by, for example, replacing a failed or faulty server with a standby unit. In addition to or instead of the email message addressed directly to the administrator, the web monitor may send a email message over Internet 104 to a paging service's specified paging server 111 when an alarm is generated. In response to that message, server initiates a page which is broadcast by antenna 112 to a pager 113 carried by the system administrator or other individual to alert him/her of the failure or fault at the web site. An example of another failure alerting mechanism may include the automatic generation of a telephone call to the system administrator or other individual. Thus, when an alarm is generated, the web monitor sends a message over Internet 104 to a phone server 115, which, in turn, generates or selects an audio message for delivery to the system administrator or other individual or machine at a specified telephone number. Phone server 115, upon receiving the message from the web monitor, automatically dials a predetermined telephone number on PSTN 116 to deliver the message to the individual or machine answering the telephone call.

After an alarm is generated indicating failure or fault at one of the monitored web sites, the web monitor continues to poll that web site. If the monitored web site continues to indicate a fault or error, continued email or other messages are not sent to the system administrator or other individual or machine until the web site is again operational. Once it is determined that the web site is operational again, the count of invalid attempts is reinitialized and monitoring of the web site every *N* seconds continues. Only after the number of invalid attempts again exceeds *M* is an alarm be generated again.

The web monitor, in addition to detecting faults and/or failures at a monitored web site, can store statistics relating to each monitored web site into a database 118 or a log file. For example, the response times for returning the requested page from a monitored web site can be tracked as a function of time or day and/or day of week. Further, statistics of web site failures can be tracked as a function of day and/or day of week.

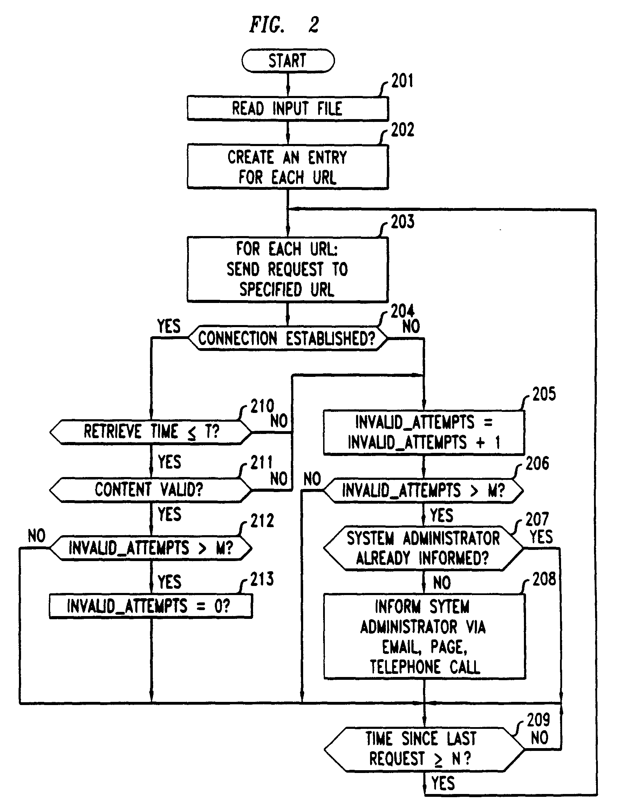

The steps of the web monitor application are shown in the flow chart 200 of FIG. 2. At step 201, the web monitor reads the input file containing the URLs of the web sites to be monitored. At step 202, an entry is created for each URL, attaching user-inputted attributes to each URL including, example, the rate of polling, *N*; *M,* the maximum number of invalid attempts (invalid_attempts) that are allowed before deciding that the monitored web site has failed; the maximum allowable response time, *T,* to return a page before declaring the request as an invalid attempt; and the email address, for example, to send a message upon declaring a failure. Once initialized, at step 203, for each URL in the input file the web monitor begins by sending a request to the specified URL. At step 204, a determination is made whether a connection has been established in response to that request. If not, then at step 205, the number of invalid attempts, invalid_attempts, is increased by one. At step 206, the number invalid_attempts is compared with *M.* If invalid_attempts is greater than *M,* then a web site failure or fault is presumed. Then, at step 207, a determination is made whether the system administrator has already been informed of that web site's failure or fault. If not, at step 208, the system administrator is informed via email, a page, or telephone call, via one or more specified methodologies. If the system administrator has already been informed, then no message is sent. Following the steps of informing system administrator of the failure or not informing the system administrator at steps 208 or 207, respectively, of if at step 206 the number invalid_attempts is less than or equal to *M* then, at step 209, the web monitor waits until the time since issuance of the last request reaches *N.* At the end of that interval, the program flow returns to step 203, whereupon the web monitor issues another request to that same specified URL and the afore-described steps are repeated if, at step 204, a connection is not established.

If, at step 204, a connection is established in response to the issuance of a request at step 203, then at step 210, a determination is made whether the retrieve time for the requested page from that URL is less than or equal to T. If not, the program flow proceeds to step 205 where the number invalid_attempts is increased by one. As previously described, at step 206, the number invalid_attempts is compared with *M,* and steps 207-209 are followed. If, at step 210, the retrieve time is less than or equal to T, then, at step 211, a determination is made whether the content of the returned page is valid using one of the afore-described content comparison methodologies. If the content is not valid, the flow proceeds again to step 205 where the number invalid_attempts is increased by one and steps 206-209 are followed. If the content is valid, then the request was successful. At that point, at step 212, if the number invalid_attempts is greater than *M,* then the web site has recovered having previously been in a fault condition. Accordingly, at step 213, the number invalid_attempts is reset to zero. Processing then continues at step 209 to await issuance of the next request. If, at step 212, the number invalid_attempts is less than or equal to *M,* then the web site might be jittering between valid and invalid request responses and invalid_attempts remains at its previous value. Processing then continues at step 209 to await issuance of the next request.

Although the above-described flowchart shows a sequence of steps, the various steps in the blocks therein can be equally understood to represent a program statement or a group of program statements stored in RAM that implement the stated function. It should be recognized that the Java JDK 1.2 code to implement the program steps in FIG. 2 could be implemented by one skilled in the art.

Although the present invention has been described hereinabove in conjunction with an embodiment that monitors a web site, it could equally be applied to monitor any other type of server on any type of data network such as an FTP server, a database server, or an operating system. Further, although the web monitor is shown running on a server, it could equally run on any client connected to the data network.

The foregoing merely illustrates the principles of the invention. It will thus be appreciated that those skilled in the art will be able to devise various arrangements which, although not explicitly described or shown herein, embody the principles of the invention and are included within its spirit and scope. Furthermore, all examples and conditional language that have been recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention.

The functions of the various elements shown in the FIGS., including functional blocks labeled as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage. Other hardware, conventional and/or custom, may also be included.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicants thus regards any means which can provide those functionalities as equivalent to those shown herein.

## Claims

1. A method for monitoring at least a first server connected on a data network comprising the steps of:
automatically sending requests for specific information over the data network to the at least first server sequentially over a period of time; and
determining whether the response to each request to the at least first server is unacceptable in a predefined manner;
if a predetermined number of unacceptable responses to requests to the at least first server result, deciding that a fault or failure of the at least first server has occurred.

2. The method of claim 2 further comprising the step of, if a fault or failure is decided to have occurred at the at least first server, sending a message to a predetermined destination to inform a recipient of the message of the fault or failure of the at least first server.

3. The method of claim 1 wherein the step of determining whether the response to each request to the at least first server is unacceptable comprises the step of determining whether a response from the at least first server is not received within a predetermined time.

4. The method of claim 1 wherein the step of determining whether the response to each request is unacceptable comprises the step of determining whether the received response does not include an expected information content.

5. The method of claim 4 wherein the step of determining whether the received response does not include an expected information content comprises the steps of comparing the information content of the received response with the expected information content, and determining that an unacceptable response has been received if the information content of the received response doesn't match the expected response.

6. The method of claim 4 wherein the step of determining whether the received response does not include an expected information content comprises the steps of determining whether the information content of the received response does not include predetermined information, and determining that an unacceptable response has been received if the received response doesn't contain the predetermined information.

7. The method of claim 1 further comprising the step of collecting and recording statistics associated with the responses to the requests to the at least first server.

8. The method of claim 7 wherein the statistics include the time for a response to be received in response to each request.

9. A web monitor for monitoring at least a first server connected on a data network comprising:
means for automatically sending requests for specific information over the data network to the at least first server sequentially over a period of time; and
means for determining whether the response to each request to the at least first server is unacceptable in a predefined manner;
wherein a fault or failure of the at least first server is decided to have occurred if a predetermined number of unacceptable responses to requests to the at least first server result.

10. The web monitor of claim 9 further comprising means for sending a message to a predetermined destination when a fault or failure has been determined to have occurred to inform the recipient of the message of the fault or failure of the at least first server.

11. The web monitor of claim 9 wherein the means for determining the response to each request is unacceptable comprises means for determining whether a response is received within a predetermined time.

12. The web monitor of claim 9 wherein the means for determining whether the response to each request is unacceptable comprises means for determining whether the information content of the received response is not what is expected.

13. The web monitor of claim 12 wherein the means for determining whether the information of the received response is not what is expected comprises means for comparing the content of the received response with an expected predetermined response, and means for determining that an unacceptable response has been received if the received response doesn't match the expected response.

14. The web monitor of claim 12 wherein the means for determining whether the information of the received response is not what is expected comprises means for determining whether the content of the received response includes predetermined information, and means for determining that an unacceptable response has been received if the received response doesn't contain the predetermined information.

15. The web monitor of claim 9 further comprising means for collecting and recording statistics associated with the responses to the requests to the at least first server.

16. The web monitor of claim 15 wherein the statistics include the time for a response to be received in response to each request to the at least first server.
